# EUROPÄISCHE PATENTSCHRIFT

(11) **EP 2 123 715 B1**
(45) Veröffentlichungstag und Bekanntmachung des Hinweises auf die Patenterteilung: **14.07.2010**
(21) Anmeldenummer: 09158224.7
(22) Anmeldetag: 20.04.2009
(51) Int. Cl.: C08L 71/00

(54) **Kerbschlagzähe Polyarylenetherketon-Formmasse**
Notch impact resistant polyaryletherketone molding composition
Composition de moulage de polyaryléthercétone résistant au choc sur l`entaille

(30) Priorität: 20.05.2008 DE 102008001873
(43) Veröffentlichungstag der Anmeldung: 25.11.2009
(73) Patentinhaber: Evonik Degussa GmbH, 45128 Essen (DE)
(72) Erfinder: Richter, Dr. Alexander, 45739, Oer-Erkenschwick (DE); Lohkämper, Hans-Guenter, 45721, Haltern am See (DE)

(56) Entgegenhaltungen:
- EP-A- 0 356 948
- EP-A- 0 451 458
- EP-A- 0 451 556
- WO-A-2007/107519
- US-A- 4 728 693

## Beschreibung

Gegenstand der Erfindung ist eine Formmasse auf Basis eines Polyarylenetherketons (PAEK) mit verbesserter Kerbschlagzähigkeit.

Teilkristalline Polyarylenetherketone zeichnen sich in der Regel durch einen hohen Schmelzpunkt und eine hohe Glasübergangstemperatur aus. Weiterhin weisen sie eine hohe mechanische Festigkeit, eine hohe Schlagzähigkeit sowie eine hohe Beständigkeit gegenüber den verschiedensten Medien auf.

Für manche Anwendungen ist allerdings die vergleichsweise geringe Kerbschlagzähigkeit von Polyarylenetherketonen nachteilig. In bestimmten Anwendungen bzw. Bauteilen kann eine oberflächliche Beschädigung oder eine konstruktiv bedingte ungünstige Bauteilform als Ausgang zu einem Riss oder einem Bruch führen.

Die Aufgabe der vorliegenden Erfindung war es, eine PAEK-Formmasse mit verbesserter Kerbschlagzähigkeit zur Verfügung zu stellen.

Diese Aufgabe wurde durch eine Formmasse gelöst, die folgende Komponenten enthält:
a) 75 bis 99,9 Gew.-Teile, bevorzugt 80 bis 99 Gew.-Teile und besonders bevorzugt 85 bis 98 Gew.-Teile Polyarylenetherketon und
b) 0,1 bis 25 Gew.-Teile , bevorzugt 1 bis 20 Gew.-Teile und besonders bevorzugt 2 bis 15 Gew.-Teile Polyalkenylen mit 5 bis 12 C-Atomen in der wiederkehrenden Einheit,
wobei die Summe dieser Gew.-Teile 100 beträgt.

Bevorzugt enthält die Formmasse die Komponenten a) und b) zusammen zu 30 bis 100 Gew.-%, besonders bevorzugt zu 40 bis 98 Gew.-%, insbesondere bevorzugt zu 50 bis 95 Gew.% und ganz besonders bevorzugt zu 60 bis 90 Gew.-%. Der Rest sind übliche Hilfs- und Zuschlagsstoffe sowie andere Polymere.

Das PAEK enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei sollten mindestens 50 %, bevorzugt mindestens 70 % und besonders bevorzugt mindestens 80 % der Gruppen X eine Carbonylgruppe darstellen, während mindestens 50 %, bevorzugt mindestens 70 % und besonders bevorzugt mindestens 80 % der Gruppen Y aus Sauerstoff bestehen sollten.

In der insbesondere bevorzugten Ausführungsform bestehen 100 % der Gruppen X aus Carbonylgruppen und 100 % der Gruppen Y aus Sauerstoff. In dieser Ausführungsform kann das PAEK beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

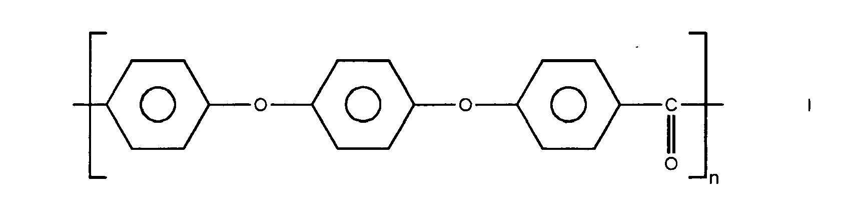

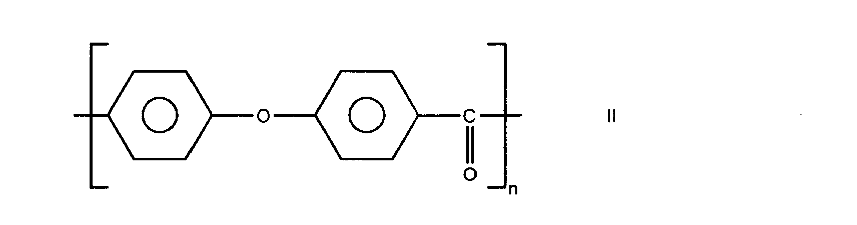

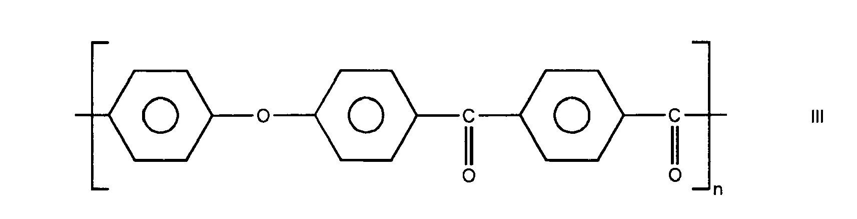

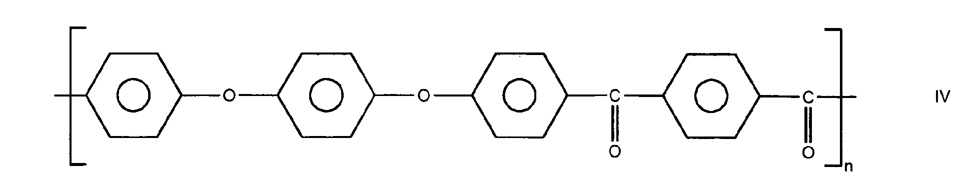

Das PAEK ist im Allgemeinen teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt. Jedoch ist die Lehre der Erfindung auch auf amorphe PAEK anwendbar. Im Allgemeinen gilt, dass Sulfonylgruppen, Biphenylengruppen, Naphthylengruppen oder sperrige Gruppen Y, wie z. B. eine Isopropylidengruppe, die Kristallinität verringern.

In einer bevorzugten Ausführungsform beträgt die Viskositätszahl, gemessen entsprechend DIN EN ISO 307 an einer Lösung von 250 mg PAEK in 50 ml 96-gewichtsprozentiger H₂SO₄ bei 25 °C, etwa 20 bis 150 cm³/g und bevorzugt 50 bis 120 cm³/g.

Das PAEK kann gemäß der sogenannten nucleophilen Route durch Polykondensation von Bisphenolen und organischen Dihalogenverbindungen und/oder von Halogenphenolen in einem geeigneten Lösemittel in Gegenwart einer Hilfsbase hergestellt werden; das Verfahren ist beispielsweise in der EP-A-0 001 879, der EP-A-0 182 648 und der EP-A-0 244 167 beschrieben. Das PAEK kann aber auch nach der sogenannten elektrophilen Route in stark saurem bzw. Lewis-saurem Milieu hergestellt werden; dieses Verfahren ist beispielsweise in der EP-A-1 170 318 sowie in der dort zitierten Literatur beschrieben.

Das Polyalkenylen ist aus wiederkehrenden Einheiten der Formel 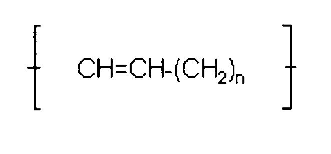 mit n = 3 bis 10 aufgebaut. Es wird meist durch ringöffnende Polymerisation von Cycloolefinen in Gegenwart eines Metathesekatalysators hergestellt. Der Polymerisationsgrad liegt in der Regel zwischen 6 und 2000, bevorzugt zwischen 15 und 1500 und besonders bevorzugt zwischen 25 und 1200. Geeignete Polymere sind z. B. Polypentenylen, Polyhexenylen, Polyheptenylen, Polyoctenylen, Polynonenylen, Polydecenylen, Poly(3-methyloctenylen), Poly(3-methyldecenylen), Polyundecenylen oder Polydodecenylen. Polyalkenylene werden gelegentlich auch als Polyalkenamere bezeichnet und die zugehörigen Polymeren als Polypentenamer, Polyhexenamer, Polyheptenamer, Polyoctenamer usw.

Die Herstellung von Polypentenylen ist beispielsweise in US 3 607 853 beschrieben. Polyhexenylen wird durch alternierende Copolymerisation von Butadien und Ethen hergestellt. Die Herstellung von Polyheptenylen geschieht durch Metathese von Cyclohepten (z. B. US 4 334 048) und diejenige von Polyoctenylen durch Metathese von Cyclocten (A. Dräxler, Kautschuk + Gummi, Kunststoff 1981, Seiten 185 bis 190). Die höheren Polyalkenylene werden entsprechend hergestellt. Im Rahmen der Erfindung können auch gemischte Polyalkenylene, d. h. Copolymere (US 3 974 092; US 3 974 094) oder Mischungen verschiedener Polyalkenylene eingesetzt werden.

Übliche Hilfs- und Zuschlagsstoffe, die in der Formmasse enthalten sein können, sind beispielsweise Verarbeitungshilfsmittel, Stabilisatoren, Pigmente, Füllstoffe, Nanofüllstoffe, faserförmige Verstärkungsstoffe oder Leitfähigkeitsadditive wie Ruß oder Carbon Nanotubes (CNT). Andere Polymere, die Bestandteil der Formmasse sein können, sind beispielsweise Fluorpolymere wie Polytetrafluorethylen, Polysulfon, Polyethersulfon, Polyphenylensulfon, Polybenzimidazol, Polyphenylensulfid, teilaromatische Polyamide (PPA), flüssigkristalline Polymere (LCP), Polyimid oder Polyetherimid.

Die Formmasse wird durch Mischen der einzelnen Komponenten in der Schmelze hergestellt.

Unter Verwendung der erfindungsgemäßen Formmasse werden mit Hilfe der für PAEK gebräuchlichen Formgebungsverfahren, beispielsweise mittels Spritzgießen, Extrusion oder Hot Compression Molding, Formteile hergestellt. Diese Formteile bestehen entweder vollständig oder teilweise aus der erfindungsgemäßen Formmasse. Im letzteren Fall handelt es sich um Verbundteile, die neben der Komponente aus der erfindungsgemäßen Formmasse mindestens eine weitere Komponente enthalten, die beispielsweise aus einer anderen Kunststoffformmasse, aus Keramik oder aus Metall besteht. Die Herstellung von mehrkomponentigen Formteilen ist Stand der Technik; beispielhaft seien mehrschichtige Rohre, mehrschichtige Folien sowie durch Hinterspritzen oder Umspritzen hergestellte Verbundteile genannt.

Die Erfindung soll nachfolgend beispielhaft erläutert werden.

In den Beispielen wurde VESTAKEEP^{®} 4000G, ein PEEK der Evonik Degussa GmbH, auf einem Coperion Werner & Pfleiderer ZSK25 WLE zusammen mit einem Polyoctenylen (VESTENAMER^{®} 8012, Evonik Degussa GmbH) compoundiert. Beide Materialien wurden als Granulatmischung in den ersten Einzug dosiert und mit einem Durchsatz von 10 kg/h, einer Schneckendrehzahl von 140 Umdrehungen pro Minute und einer Zylindertemperatur von 370 °C umgeschmolzen. Es wurde mit einer Vakuumentgasung von 100 bis 200 mbar gearbeitet. Die homogene Schmelze kühlte nach Austritt aus der Düse ab und wurde zu Granulat zerkleinert. Auf diese Weise wurden drei verschiedene Compounds hergestellt:
Beispiel 1: 95 Gew.-% PEEK; 5 Gew.-% Polyoctenylen
Beispiel 2: 90 Gew.-% PEEK; 10 Gew.-% Polyoctenylen
Beispiel 3: 85 Gew.-% PEEK; 15 Gew.-% Polyoctenylen

Als Referenz diente reines VESTAKEEP^{®} 4000G.

Die granulierten Compounds sowie das Referenzmaterial wurden auf einer Arburg-Spritzgießmaschine bei einer Massetemperatur von 380 °C und einer Formtemperatur von 180 °C zu Prüfkörpern verarbeitet. Die Ergebnisse der mechanischen und thermischen Prüfung sind in der Tabelle 1 zusammengefasst.

**Table 1: Ergebnisse der Prüfungen**

| **Eigenschaften** | | **Prüfnorm** | **Einheit** | **Referenz** | **Beispiel 1** | **Beispiel 2** | **Beispiel 3** |
|---|---|---|---|---|---|---|---|
| Volumenfließrate (MVR) | 400 °C/5 kg | ISO 1133 | cm³/10min | 14,5 | 9,6 | 9,5 | 4,7 |
| Zugversuch Streckspannung | 50 mm/min | ISO 527-1/2 | MPa | 96 | 80 | 71 | - |
| Streckdehnung | | | % | 5 | 5,1 | 7 | - |
| Bruchdehnung | | | % | 30 | 78 | 96 | 93 |
| Zugmodul | | | MPa | 3500 | 3080 | 2750 | 2320 |
| CHARPY-Schlagzähigkeit | 23 °C | IS0 179/1eU | kJ/m² | N | N | N | N |
| | -30 °C | | kJ/m² | N | N | N | N |
| CHARPY-Kerbschlagzähigkeit | 23 °C | IS0 179/1eA | kJ/m² | 7 C | 24 C | 35 C | 30 H |
| | -30 °C | | kJ/m² | 6 C | 17 C | 18 C | 17 C |
| Formbeständigkeitstemperatur | Methode A | DIN EN ISO 75 | °C | 155 | 154 | 152 | 150 |
| | Methode B | | °C | 205 | 196 | 173 | 174 |
| Vicat-Erweichungstemperatur | Methode A50 | DIN EN ISO 306 | °C | 335 | 336 | 336 | 337 |
| | Methode B50 | | °C | 305 | 280 | 266 | 252 |

| | | | | | | | |
|---|---|---|---|---|---|---|---|
| N = kein Bruch / C = vollständiger Bruch / H = Scharnierbruch | | | | | | | |

Aus den Daten geht hervor, dass erfindungsgemäß schon bei geringem Gehalt an Polyoctenylen die Kerbschlagzähigkeit deutlich verbessert werden kann. Die Änderungen der übrigen Kennwerte stehen im Einklang mit den Änderungen, die bei Kautschukmodifizierung zu erwarten sind. Überraschend ist, dass trotz der in der VESTENAMER^{®}-Produktbroschüre angegebenen Grenze für die thermische Stabilität (275 °C bei TGA-Untersuchung), die für eine derartige aliphatische Verbindung auch plausibel ist, sogar bei den erheblich höheren Temperaturen, die für die Compoundierung mit einem PAEK erforderlich sind (hier 370 °C) die Wirkung eines schlagzähmodifizierenden Kautschuks erzielt wird. Dies ist umso mehr überraschend, als das eingesetzte Polyalkenylen von seinen Eigenschaften her (Kristallinität bei Raumtemperatur; niedrige Viskosität der Schmelze) kein kautschukartiges Verhalten zeigt.

## Patentansprüche

1. Formmasse, die folgende Komponenten enthält:
a) 75 bis 99,9 Gew.-Teile Polyarylenetherketon und
b) 0,1 bis 25 Gew.-Teile Polyalkenylen mit 5 bis 12 C-Atomen in der wiederkehrenden Einheit,
wobei die Summe dieser Gew.-Teile 100 beträgt.

2. Formmasse gemäß Anspruch 1,
**dadurch gekennzeichnet,**
**dass** die Komponenten a) und b) zusammen zu mindestens 30 Gew.-% enthalten sind.

3. Formmasse gemäß einem der vorhergehenden Ansprüche,
**dadurch gekennzeichnet,**
**dass** das Polyarylenetherketon ein Polyetheretherketon (PEEK), ein Polyetherketon (PEK), ein Polyetherketonketon (PEKK) oder ein Polyetheretherketonketon (PEEKK) ist.

4. Formteil, hergestellt unter Verwendung der Formmasse gemäß einem der vorhergehenden Ansprüche.

5. Formteil gemäß Anspruch 4,
**dadurch gekennzeichnet,**
**dass** es vollständig aus der Formmasse gemäß einem der Ansprüche 1 bis 3 besteht.

6. Formteil gemäß Anspruch 4,
**dadurch gekennzeichnet,**
**dass** es ein Verbundteil ist.

## Claims

1. Moulding composition, which comprises the following components:
a) from 75 to 99.9 parts by weight of polyarylene ether ketone and
b) from 0.1 to 25 parts by weight of polyalkenylene having from 5 to 12 carbon atoms in the repeat unit, where the total of these parts by weight is 100.

2. Moulding composition according to Claim 1,
**characterized in that**
the amount present as components a) and b) together is at least 30% by weight.

3. Moulding composition according to either of the preceding claims,
**characterized in that**
the polyarylene ether ketone is a polyether ether ketone (PEEK), a polyether ketone (PEK), a polyether ketone ketone (PEKK) or a polyether ether ketone ketone (PEEKK).

4. Moulding, produced using the moulding composition according to any of the preceding claims.

5. Moulding according to Claim 4,
**characterized in that**
it is composed entirely of the moulding composition according to any of Claims 1 to 3.

6. Moulding according to Claim 4,
**characterized in that**
it is a composite part.

## Revendications

1. Masse de moulage qui contient les composants suivants :
a) 75 à 99, 9 parties en poids de polyarylène-éthercétone et
b) 0, 1 à 2 5 parties en poids de polyalcénylène comprenant 5 à 12 atomes de carbone dans l'unité répétitive,
la somme de ces parties en poids valant 100.

2. Masse de moulage selon la revendication 1, **caractérisée en ce que** les composants a) et b) sont contenus ensemble à raison d'au moins 30% en poids.

3. Masse de moulage selon l'une quelconque des revendications précédentes, **caractérisée en ce que** la polyarylène-éthercétone est une polyétheréthercétone (PEEC), une polyéthercétone (PEC), une polyéthercétonecétone (PECC) ou une polyétheréthercétonecétone (PEECC).

4. Pièce moulée, préparée en utilisant la masse de moulage selon l'une quelconque des revendications précédentes.

5. Pièce moulée selon la revendication 4, **caractérisée en ce qu'**elle est totalement constituée par la masse de moulage selon l'une quelconque des revendications 1 à 3.

6. Pièce moulée selon la revendication 4, **caractérisée en ce qu'**il s'agit d'une pièce composite.
